# EUROPEAN PATENT SPECIFICATION

(11) **EP 2 463 540 B1**
(45) Date of publication and mention of the grant of the patent: **31.07.2013**
(21) Application number: 10194735.6
(22) Date of filing: 13.12.2010
(51) Int. Cl.: F16D 25/0638

(54) **Clutch assembly**
Kupplungsanordnung
Ensemble formant embrayage

(43) Date of publication of application: 13.06.2012
(73) Proprietor: Turner Powertrain Systems Limited, Wolverhampton West Midlands WV6 0QT (GB)
(72) Inventor: Mulcaster, Jonathan James, Highnam Gloucestershire GL2 8NB (GB); Penksik, Sergei, Wolverhampton West Midlands WV6 0QT (GB)
(74) Representative: Modiano, Micaela Nadia

(56) References cited:
- EP-A1- 0 718 517
- WO-A1-94/10471
- GB-A- 2 147 371
- US-A- 5 551 548

## Description

### Technical Field

This disclosure generally relates to a transmission system, in particular, this disclosure relates to a clutch assembly and a method of assembling the clutch assembly, and more particularly to clutches of the sliding type.

### Background

Generally sliding clutches for transmission are known. Sliding clutches may involve a slidingly supported piston which may be actuatable to couple an input shaft to an output shaft.

US 2009/283381 A1 discloses a sliding clutch assembly for selectively coupling a first shaft to a second shaft. The assembly may include a piston housed within the first shaft. The piston may be slidingly supported on a third shaft and may be moveable between two positions. In the first position, the piston may engage the first shaft but not the second shaft. In the second position, a feature on the piston may engage a feature on the second shaft so that the piston is rotatingly coupled to both the first shaft and the second shaft.

GB 2 147 371 and EP 0 718 517 both disclose clutch assemblies having sliding clutch drums, where the clutching pressure is provided by springs and the disengagement is achieved by applying hydraulic pressure in a pressure chamber.

The present disclosure is directed, at least in part, to improving or overcoming one or more aspects of the prior art system.

### Brief Summary of the Invention

In a first aspect, the present disclosure describes a clutch assembly for a transmission, comprising a clutch drum drivingly coupled to an input shaft, the clutch drum having a first portion and a second portion, wherein the clutch drum is axially slidable on the input shaft for the first portion to pressingly engage a clutch pack.

The clutch drum includes a second portion slidably disposed in a hydraulic chamber, the clutch drum is actuatable by a hydraulic fluid pushing on the second portion to slide axially into pressing engagement with the clutch pack.

In a second aspect, the present disclosure describes a method of assembling a clutch assembly comprising the steps of providing a clutch drum having a first portion and a second portion and drivingly coupling the clutch drum to an input shaft, the clutch drum being axially slidable on the input shaft.

### Brief Description of the Drawings

The foregoing and other features and advantages of the present disclosure will be more fully understood from the following description of various embodiments, when read together with the accompanying drawing, in which:
Fig. 1 is a cross-section view of a clutch assembly, according to the present disclosure, coupled to a transmission;

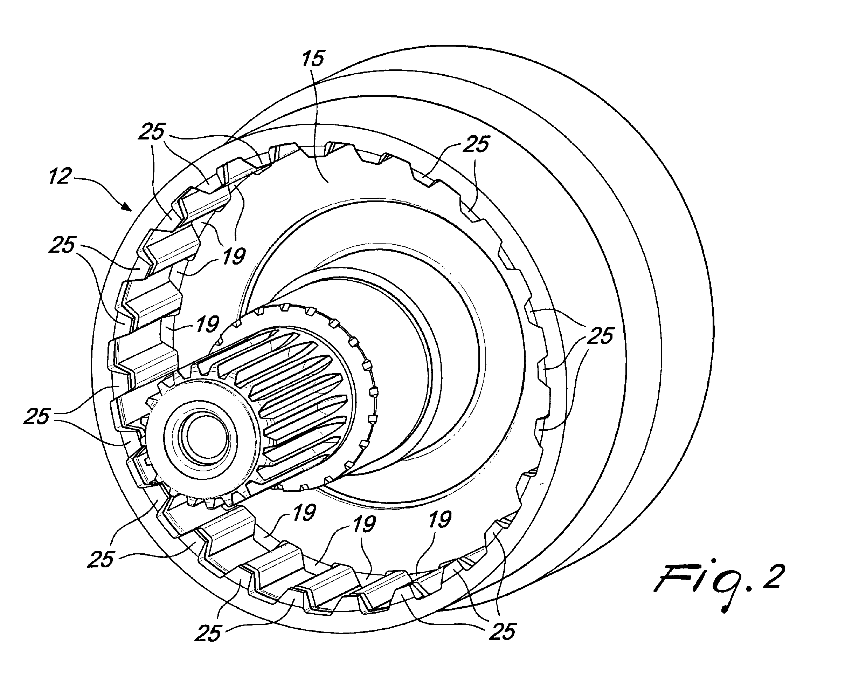

Fig. 2 is an isometric view of a portion of the clutch assembly, of Fig. 1, coupled to shaft of a transmission.

### Detailed Description

This disclosure generally relates to a clutch assembly for actuating a clutch pack in a transmission of a vehicle.

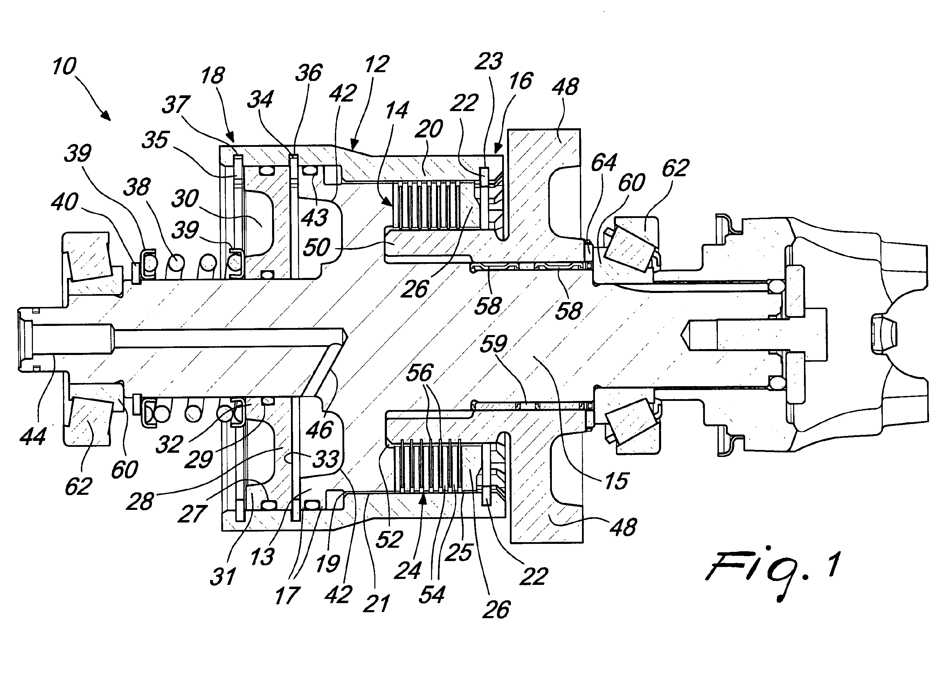

Fig. 1 shows a clutch assembly **10** coupled to a transmission. The clutch assembly **10** may comprise a clutch drum **12.** The clutch drum **12** may be drivingly coupled to the input shaft **15** so that the clutch drum **12** may rotate with the input shaft **15.** The clutch drum **12** may be axially movable relative to an input shaft **15** of the transmission. The clutch drum **12** may be actuated to slide axially relative to the input shaft **15.** The input shaft **15** may have an arm **13.**

The clutch drum **12** may comprise a first portion **16,** a second portion **18** and a body portion **20.**

The body portion **20** may be elongated and having a longitudinal axis. The longitudinal axis of the body portion **20** may define an axial direction. The body portion **20** may have a cylindrical geometry and may have a chamber formed therein. The body portion **20** may have an inner peripheral side **21** which defines the chamber.

With the clutch assembly **10** mounted on a transmission, a portion of the input shaft **15** may be located within the chamber. The longitudinal axis of the body portion **20** may be coincident with the longitudinal axis of the input shaft **15.** The arm **13** of the input shaft **15** may have fingers **17.** The body portion **20** may move axially relative to the input shaft **15** when the clutch drum **12** is actuated.

The first portion **16** may be provided at an end of the body portion **20** and may be configured to engage with a clutch pack **14.** In an embodiment, the first portion **16** may be configured to pressingly engage with the clutch pack **14.** The first portion **16** may move axially relative to the input shaft **15** when the clutch drum **12** is actuated.

The first portion **16** may comprise an urging element **22.** The urging element **22** may be positioned in the chamber and adjacent to an end of the clutch drum **12.** The urging element **22** may move with the body portion **20** along the axial direction relative to the input shaft **15** when the clutch drum **12** is actuated.

The urging element **22** may be a ring which may be concentric with the body portion **20** and may have a plane substantially perpendicular to the longitudinal axis of the body portion **20.** The urging element **22** may be a snap ring.

In an embodiment, the urging element **22** may comprise of a single tab or a series of tabs.

With the clutch assembly **10** assembled on a transmission, the urging element **22** may be disposed between the inner peripheral side **21** of body portion **20** and the input shaft **15.** The urging element **22** may have a central hole through which the input shaft **15** may be accommodated.

The urging element **22** may be held in a slot **23** cut into the inner peripheral side **21.** The slot **23** may be configured to receive and rigidly hold the urging element 22. In an embodiment, the slot **23** may be continuous and annular.

Adjacent the urging element **22,** the clutch drum **12** may have an input hub **24** on the inner peripheral side **21** of body portion **20.** The input hub **24** may extend along the axial direction, with respect to the longitudinal axis of the body portion **20,** away from urging element **22** into the chamber. The input hub **24** may move with the body portion **20** along the axial direction relative to the input shaft **15** when the clutch drum **12** is actuated.

In an embodiment, the input hub **24** may comprise a drum spline **25.**

The input hub **24** may comprise a driving element or a plurality of driving elements. The driving element may enable the input hub **24** to connect to and drive a corresponding hub comprising a driven element or a series of driven elements.

The drum spline **25** may engage with a shaft spline **19** provided on the shaft **15.** The engagement of the drum spline **25** and the shaft spline **19** may couple the input shaft **15** and the clutch drum **12** such that the clutch drum **12** may rotate with the input shaft **15.** The engagement of the drum spline **25** and the shaft spline **19** may allow relative axial movement between the input shaft **15** and the clutch drum **12.** The engagement of the drum spline **25** and the shaft spline **19** may allow a rotational coupling combined with a relative axial movement.

The first portion **16** may comprise a clutch end plate **26.** The clutch end plate **26** may be positioned within the chamber on the inner peripheral side **21** adjacent to the urging element **22.**

The clutch end plate **26** may be disposed in the input hub **24** and may be slidable in the input hub **24** along the axial direction. In an embodiment, the clutch end plate **26** may be disposed in the drum spline **25** of the input hub **24** and may be slidable in the drum spline **25** along the axial direction.

The clutch end plate **26** may be located between the clutch pack **14** and the urging element **22.** The clutch end plate **26** may be axially aligned with the clutch pack **14** and/ or the urging element **22.** The clutch end plate **26** may be in abutting engagement with the clutch pack **14** and with the urging element **22.**

The second portion **18** may be provided at an end of the body portion **20** opposite the first portion **16.** The second portion **18** may be configured to be driven in order to actuate the clutch drum **12.** The second portion **18** may be hydraulically, pneumatically resiliently or electromagnetically driven.

The body portion **20** may be movable along the axial direction relative to the input shaft **15** when the second portion **18** may be driven to move.

The second portion **18** may comprise a piston **28.** The piston **28** may be axially spaced from an end of the body portion **20** opposite the first portion **16.** The piston **28** may be concentric with the body portion **20** and the input shaft **15.** The piston **28** may have a plane that is perpendicular to the longitudinal axis of the body portion **20** and parallel to the clutch end plate **26** and the urging element **22.** The piston **28,** the clutch end plate **26** and the urging element **22** may be axially aligned.

The body portion **20** may be movable along the axial direction relative to the input shaft **15** when the piston **28** may be driven to move.

With the clutch assembly **10** assembled on a transmission, the piston **28** may be disposed in the chamber between the inner peripheral side **21** of body portion **20** and the input shaft **15.** The piston **28** may be an annular disc having a central annular hole through which the input shaft **15** may be accommodated.

The piston **28** may be provided with an outer groove **27** at the outer perimeter and an inner groove **29** at the inner perimeter enclosing the annular hole. The outer groove **27** and the inner groove **29** may be concentric with the body portion **20.** O-rings may be provided in the outer and inner grooves **27, 29.**

Between the inner and outer perimeters the piston **28** may have an annular channel **30.** A side of the piston **28** may be divided by the channel **30** to form a first projection **31** and a second projection **32.** The first and second projections **31, 32** may be annular rings. A thrust surface **33** may be formed opposite the first and second projections **31, 32.**

The piston **28** may be retained relative to the body portion **20** at the inner peripheral side **21** by a first retaining element **34** and a second retaining element **35.** The first and second retaining elements **34, 35** may cooperate rigidly to retain the piston **28** in a fixed position. The first and second retaining elements **34, 35** may be movable with the body portion **20** along the axial direction relative to the input shaft **15** when piston **28** may be driven to move.

The first retaining element **34** may be in abutting contact with the thrust surface **33.** The second retaining element **35** may be in abutting contact with the first projection **31.**

The first retaining element **34** and the second retaining element **35** may be rings which may be concentric with the body portion **20** and each may have a plane substantially perpendicular to the longitudinal axis of the body portion **20** and parallel to the piston **28,** the clutch end plate **26** and the urging element **22.**

With the clutch assembly **10** assembled on a transmission, the first and second retaining elements **34, 35** may be disposed in the chamber between the inner peripheral side **21** of body portion **20** and the input shaft **15.** The first and second retaining elements **34, 35** may have central holes through which the input shaft **15** may be accommodated.

The first and second retaining elements **34, 35,** the piston **28,** the clutch end plate **26** and the urging element **22** may be axially aligned. In an embodiment, the first and second retaining elements **34, 35** may be snap rings.

The first and second retaining elements **34, 35** may be held respectively in retainer grooves **36, 37** which may be cut into the inner peripheral side **21.** The retainer grooves **36, 37** may be configured to receive and rigidly hold the first and second retaining elements **34, 35.** In an embodiment, the retainer grooves **36, 37** may be continuous and annular.

The piston **28** may be movable in two opposite directions along the axial direction relative to the input shaft **15.** The piston **28** may be configured to be driven in order to actuate the clutch drum **12** in either of the directions. The piston **28** may be hydraulically, pnuematically or resiliently driven or any combination thereof. In an embodiment, the piston **28** may be resiliently driven in one axial direction and hydraulically driven in the opposite axial direction.

In an embodiment, the piston **28** may be resiliently driven to actuate the clutch drum **12** to slide axially such that the first portion **16** may not be in pressing engagement with the clutch pack **14** or may disengage from the clutch pack **14.** The clutch assembly **10** may comprise a biasing element **38** for resiliently driving the piston **28** to actuate the clutch drum **12.** The biasing element **38** may be mounted between retainer plates **39.**

With the clutch assembly **10** assembled on a transmission, the biasing element **38** and the retainer plates **39** may be mounted to the input shaft **15** such that the biasing element **38** and the retainer plates **39** may be concentric with the input shaft **15** and may be concentric with the body portion **20.**

One of the retainer plates **39** may be in abutting contact with second projection **32** of the piston **28** and may be axially movable relative to input shaft **15** to drive the piston **28.** The second of the retainer plates **39** may be in abutting contact with a boss **40** and may be held against the boss **40** by the biasing element **38** so that said retainer plate **39** may not be movable relative to the input shaft **15.**

The biasing element **38** may continuously push the piston **28** away from the boss **40** along the axial direction relative to the input shaft **15** which may actuate the clutch drum **12** to move axially such that the first portion **16** may not be in pressing engagement with the clutch pack **14** or may disengage from the clutch pack **14.**

The arm **13** of the input shaft may limit the axial movement of the piston **28** away from the boss **40.** The axial movement of the piston **28** may be limited by the first retaining element **34** moving into an abutting engagement with the arm **13.** In the absence of a counter force, the piston **28** with the retaining element **34** at abutting engagement with the arm **13** may represent the resting position of the piston **28.**

In an embodiment, the biasing element **38,** may be an axially compressible spring.

In an embodiment, the piston **28** may be hydraulically driven to actuate the clutch drum **12** to slide axially such that the first portion **16** may pressingly engage with the clutch pack **14.**

With the clutch assembly **10** assembled on a transmission, the piston **28** may be disposed in a hydraulic chamber **42** for hydraulically driving the piston **28.** The clutch drum **12** may be actuatable by a hydraulic fluid in the hydraulic chamber **42** to axially slide into pressing engagement with the clutch pack **14.**

The clutch drum **12** may be actuatable by the hydraulic fluid pushing on the piston **28** of the second portion **18** slidably disposed in the hydraulic chamber **42.**The piston **28** may be axially movable in the hydraulic chamber **42.** The thrust surface **33** of the piston **28** may face the hydraulic chamber **42.**

In an embodiment, the hydraulic chamber **42** may be formed in the input shaft **15** and may be delimited by the thrust surface **33** and the inner peripheral side **21** of the body portion **20.** The hydraulic chamber **42** may be made oil tight by the O-rings in the outer and inner grooves **27, 29** and an O-ring in a shaft groove **43** positioned between fingers 17.

Hydraulic fluid may be delivered from a hydraulic source to the hydraulic chamber **42** through a fluid path. The fluid path may be defined by a fluid bore **44** and a fluid passage **46.** The fluid bore **44** may extend in a direction substantially parallel with the longitudinal axis of the body portion **20** and the longitudinal axis of the input shaft **15.** The fluid passage **46** may connect the fluid bore **44** to the hydraulic chamber **42.** In an embodiment, the fluid bore **44** and the fluid passage **46** may be formed in the input shaft **15.**

The hydraulic pressure in the hydraulic chamber may increase as hydraulic fluid is delivered into the hydraulic chamber **42** under pressure. The piston **28** may be driven under hydraulic pressure from the hydraulic fluid in an axial direction toward the boss **40** against the biasing force of the biasing element **38** which may actuate the clutch drum **12** to move axially such that the first portion **16** may pressingly engage with the clutch pack **14.**

In a transmission mounted with the clutch assembly **10,** the input shaft **15** may be coupled to an output member **48.** The input shaft **15** may be coupled to the output member **48** through the clutch pack **14.**

The output member **48** may be bearingly mounted on the input shaft **15.** A pair of needle bearings **58** may be positioned between the output member **48** and the input shaft. A spacer **59** may be disposed between the needle bearings **58.** In an embodiment, the output member **48** may be a gear.

The output member **48** may have an output hub **50.** The output hub **50** may comprise a driven element or a plurality of driven elements. The driven element may enable the output hub **50** to connect to and be driven by the input hub **24** comprising a driving element or a series of driving elements. In an embodiment, the output hub **50** may comprise an output spline **52.** The output hub **50** may not move along the axial direction relative to the input shaft 15. In an embodiment, the output hub **50** may be a gear hub.

In an embodiment, clutch pack **14** may be a multi-plate clutch laterally disposed between the input hub **24** in the clutch drum **12** and output hub **50.** The multi-plate clutch may be axially positioned between the input shaft **15** and the first portion **16** of the clutch drum **12.** The multi-plate clutch may be compressed by the clutch end plate **26** pressing on the clutch pack **14** at one axial end while at the other axial end the clutch pack **14** is limited by the input shaft **15** which is stationary relative to the clutch drum **12** and the clutch pack **14.**

The multi-plate clutch may comprise a plurality of driving plates **54** and a plurality of driven plates **56.** The driving plates **54** and the driven plates **56** may be axially aligned and may be alternately arranged.

The driving plates **54** may be drivingly connected to the input hub **24.** The driving plates **54** may be axially movable along the input hub **24.** The driving plates **54** may be axially movable in the drum spline **25.** The clutch end plate **26** may axially push the driving plates **54** in the drum spline **25.**

The driven plates **56** may be drivingly connected to the output hub **50.** The driven plates **56** may be axially movable along the output hub **50.** The driven plates **56** may be axially movable in the output spline **52.**

The input shaft **15** may be supported by taper roller bearing cones **60** and taper roller bearing cups **62.** A thrust bearing **64** may be positioned between the output member **48** and the taper roller bearing cones **60.**

In operation of a transmission, the input shaft **15** may be coupled to the output member **48** by engaging the clutch assembly **10.** Hydraulic fluid may be delivered under pressure from a source through a fluid path defined by the fluid bore **44** and the fluid passage **46** to the hydraulic chamber **42.** The hydraulic pressure in the hydraulic chamber may increase as hydraulic fluid enters the hydraulic chamber **42** under pressure. The piston **28** may be driven under hydraulic pressure from the hydraulic fluid in an axial direction toward the boss **40** and against the biasing force of the biasing element **38,** thereby compressing the biasing element **38.**

The axial movement of the piston **28** may actuate the clutch drum **12** to move axially such that the first portion **16** may pressingly engage with the clutch pack **14.** The clutch drum **12** may move relative to the shaft **15.** The drum spline **25** may engage the shaft spline **19** as the clutch drum **12** moves relative to the shaft **15.**

The urging element **22** may urge the clutch end plate **26** pressingly to engage the clutch pack **14.** The clutch pack **14** may be compressed between the input shaft **15** and the advancing clutch end plate **26.** The clutch end plate **26** and the driving plates **54** may slide axially in the drum spline **25.**

As the clutch pack is compressed, the driving plates **54** may engage the driven plates 56 which may slide axially in the output spline **52.** The input hub **24** may be coupled to the output hub **50** when the driving plates **54** engage the driven plates **56,** thereby coupling the input shaft **15** to the output member **48.**

The clutch assembly **10** may be disengaged by allowing the hydraulic fluid to flow out of the hydraulic chamber **42.** The biasing element **38,** which may not be subject to a counter force, may push against the second portion **18** of the clutch drum **12.** The biasing element **38** may axially push against the piston **28.**

The biasing element **38** may push the piston **28** away from the boss **40** along the axial direction to actuate the clutch drum **12** to move axially. The clutch drum **12** may move relative to the shaft **15** with the drum spline **25** engaging the shaft spline.

As the clutch drum **12** moves axially in a direction away from the boss **40** the first potion **16** may move axially away from the clutch pack **14** so that the clutch end plate **26** may disengage from the clutch pack **14.**

The axial movement of the piston 28 may be limited by the first retaining element **34** moving into abutting engagement with the arm **13.**

The clutch assembly **10** may be assembled by providing a clutch drum **12** having a first portion **16** and a second portion **18** and drivingly coupling the clutch drum **12** to an input shaft **15.** The clutch drum **12** may be assembled on the input shaft **15** to be axially slidable thereon.

The method may comprise assembling a clutch pack **14** between an input hub **24** in the clutch drum **12** and an output hub **50.** The clutch pack **14** being laterally disposed between the input hub **24** and the output hub **50.** The clutch pack **14** may be assembled between the input shaft **15** and the first portion **16** of the clutch drum **12.**

### Industrial Applicability

This disclosure describes a clutch assembly **10** for actuating a clutch pack **14** such as a multi-plate clutch, in a transmission of a vehicle.

The clutch assembly may be assembled to a transmission without welded joints. In particular, the clutch drum **12** may not be welded to the input shaft **15.**

The industrial applicability of the clutch assembly **10** as described herein will have been readily appreciated from the foregoing discussion.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A clutch assembly (10) for a transmission, comprising:
a clutch drum (12) drivingly coupled to an input shaft (15), the clutch drum (12) having a first portion (16), wherein the clutch drum (12) is axially slidable on the input shaft (15) for the first portion (16) to pressingly engage a clutch pack (14) **characterised in that** the clutch drum (12) includes a second portion (18) slidably disposed in a hydraulic chamber (42), the clutch drum (12) being actuatable by a hydraulic fluid pushing on the second portion (18) to slide axially into pressing engagement with the clutch pack (14).

2. The clutch assembly (10) of claim 1 wherein the clutch pack (14) is a multi-plate clutch laterally disposed between an input hub (24) in the clutch drum (12) and an output hub (50) and comprising a plurality of driving plates (54) and a plurality of driven plates (56).

3. The clutch assembly (10) of claim 2 wherein the clutch pack (14) is axially disposed between the first portion (16) and the input shaft (15).

4. The clutch assembly (10) of claim 2 or 3 wherein the plurality of driven plates (56) are drivingly connected to and axially movable along the output hub (50), and the plurality of driving plates (54) are drivingly connected to and axially movable along the input hub (24).

5. The clutch assembly (10) of any one of the preceding claims wherein the first portion (16) comprises a clutch end plate (26) axially aligned to the clutch pack (14).

6. The clutch assembly (10) of claim 5 wherein the first portion (16) comprises an urging element (22) in abutting engagement with the clutch end plate (26).

7. The clutch assembly (10) of claim 1 wherein the hydraulic chamber (42) is formed in the input shaft (15).

8. The clutch assembly (10) of claim 1 or 7 wherein the hydraulic fluid is delivered to the hydraulic chamber (42) via a fluid path (44, 46) disposed in the input shaft (15).

9. The clutch assembly (10) of any one of the preceding claims wherein the clutch drum (12) is actuatable by a biasing element (38) and adapted to slide axially to disengage from the clutch pack (14).

10. The clutch assembly (10) of any one of the preceding claims 2 to 9 wherein the output hub (50) is a gear hub.

11. A transmission comprising a clutch assembly (10) of any one of the preceding claims.

12. A method of assembling a clutch assembly (10) of any one of the preceding claims 1 to 10 comprising the steps of:
providing a clutch drum (12) having a first portion (16) and a second portion (18);
drivingly coupling the clutch drum (12) to an input shaft (15), the clutch drum (12) being axially slidable on the input shaft (15);
slidably disposing a second portion (18) of the clutch drum (12) in a hydraulic chamber (42); and
arranging the clutch drum (12) to be actuatable by a hydraulic fluid pushing on the second portion (18) to slide axially into pressing engagement with the clutch pack (14).

13. A method of operating a transmission comprising the clutch assembly (10) of any one of the preceding claims 1 to 10 comprising the step of:
actuating a clutch drum (12) having a first portion (16) to slide axially on an input shaft (15) and a second portion (18) slidably disposed in a hydraulic chamber (42) so that the first portion (16) pressingly engages a clutch pack (14), the clutch drum (12) being actuatable by a hydraulic fluid pushing on the second portion (18) to slide axially into pressing engagement with the clutch pack (14).

## Patentansprüche

1. Kupplungsanordnung (10) für einen Antriebsstrang, umfassend:
eine Kupplungstrommel (12), die antreibend an eine Eingangswelle (15) gekoppelt ist, wobei die Kupplungstrommel (12) einen ersten Abschnitt (16) aufweist, und wobei die Kupplungstrommel (12) axial auf der Eingangswelle (15) verschiebbar ist, so dass der erste Abschnitt (16) pressend in ein Lamellenpaket (14) eingreift, **dadurch gekennzeichnet, dass** die Kupplungstrommel (12) einen zweiten Abschnitt (18) umfasst, der verschiebbar in einer Hydraulikkammer (42) angeordnet ist, wobei die Kupplungstrommel (12) durch ein Hydraulikfluid antreibbar ist, das Druck auf den zweiten Abschnitt (18) ausübt, so dass dieser axial verschoben wird und pressend an dem Lamellenpaket (14) angreift.

2. Kupplungsanordnung (10) nach Anspruch 1, wobei das Lamellenpaket (14) eine Lamellenkupplung ist, die lateral zwischen einer Eingangsnabe (24) in der Kupplungstrommel (12) und einer Ausgangsnabe (50) angeordnet ist, und die eine Mehrzahl von Antriebslamellen (54) sowie eine Mehrzahl von angetriebenen Lamellen (56) umfasst.

3. Kupplungsanordnung (10) nach Anspruch 2, wobei das Lamellenpaket (14) axial zwischen dem ersten Abschnitt (16) und der Eingangswelle (15) angeordnet ist.

4. Kupplungsanordnung (10) nach Anspruch 2 oder 3, wobei die Mehrzahl der Antriebslamellen (56) antreibend mit der Ausgangsnabe (50) verbunden und auf dieser axial beweglich sind, wobei die Mehrzahl der Antriebslamellen (54) antreibend mit der Eingangsnabe (24) verbunden und axial auf dieser beweglich sind.

5. Kupplungsanordnung (10) nach einem der vorstehenden Ansprüche, wobei der erste Abschnitt (16) eine Kupplungsendlamelle (26) umfasst, die axial an dem Lamellenpaket (14) ausgerichtet ist.

6. Kupplungsanordnung (10) nach Anspruch 5, wobei der erste Abschnitt (16) ein Drückelement (22) umfasst, das an der Kupplungsendlamelle (26) anliegt und mit dieser in Eingriff steht.

7. Kupplungsanordnung (10) nach Anspruch 1, wobei die Hydraulikkammer (42) in der Eingangswelle (15) ausgeformt ist.

8. Kupplungsanordnung (10) nach Anspruch 1 oder 7, wobei das Hydraulikfluid zu der Hydraulikkammer (42) mittels eines Fluidweges (44, 46), der in der Eingangswelle (15) angeordnet ist, geleitet wird.

9. Kupplungsanordnung (10) nach einem der vorstehenden Ansprüche, wobei die Kupplungstrommel (12) mittels eines Spannelements (38) antreibbar und ausgelegt ist, um axial zu gleiten, um sich von dem Lamellenpaket (14) zu lösen.

10. Kupplungsanordnung (10) nach einem der vorstehenden Ansprüche 2 bis 9, wobei die Ausgangsnabe (50) eine Zahnnabe ist.

11. Antriebsstrang umfassend eine Kupplungsanordnung (10) nach einem der vorstehenden Ansprüche.

12. Verfahren zum Aufbauen einer Kupplungsanordnung (10) nach einem der vorstehenden Ansprüche 1 bis 10, umfassend die Schritte:
Bereitstellen einer Kupplungstrommel (12), die einen ersten Abschnitt (16) und einen zweiten Abschnitt (18) aufweist;
antreibendes Koppeln der Kupplungstrommel (12) an eine Eingangswelle (15), wobei die Kupplungstrommel (12) axial verschiebbar auf der Eingangswelle (15) ist;
verschiebbare Anordnung eines zweiten Abschnitts (18) der Kupplungstrommel (12) in einer Hydraulikkammer (42); und
Anordnen der Kupplungstrommel (12) derart, dass sie von einem Hydraulikfluid angetrieben werden kann, das auf den zweiten Abschnitt (18) Druck ausübt, so dass dieser axial verschoben und in pressenden Eingriff mit dem Lamellenpaket (14) gebracht wird.

13. Verfahren zum Betreiben eines Antriebsstrangs, der eine Kupplungsanordnung (10) nach einem der vorstehenden Ansprüche 1 bis 10 umfasst, umfassend die Schritte:
Antreiben einer Kupplungstrommel (12), die einen ersten Abschnitt (16) zum axialen Verschieben auf einer Eingangswelle (15) und einen zweiten Abschnitt (18), der in einer Hydraulikkammer (42) angeordnet ist, umfasst, so dass der erste Abschnitt (16) pressend in ein Lamellenpaket (14) eingreift, wobei die Kupplungstrommel (12) mittels eines Hydraulikfluids, das Druck auf den zweiten Abschnitt (18) ausübt, angetrieben werden kann, um axial gleitend in pressenden Eingriff mit dem Lamellenpaket (14) gebracht zu werden.

## Revendications

1. Ensemble formant embrayage (10) pour transmission, comprenant :
un tambour d'embrayage (12) accouplé en entraînement avec un arbre d'entrée (15), le tambour d'embrayage (12) comportant une première partie (16), dans lequel le tambour d'embrayage (12) peut glisser axialement sur l'arbre d'entrée (15) pour que la première partie (16) se mette en prise en pression avec une série de disques (14), **caractérisé en ce que** le tambour d'embrayage (12) comprend une deuxième partie (18) disposée de façon glissante dans une chambre hydraulique (42), le tambour d'embrayage (12) pouvant être actionné par un fluide hydraulique exerçant une pression sur la deuxième partie (18) pour qu'il glisse axialement pour se mettre en prise en pression avec la série de disques (14).

2. Ensemble formant embrayage (10) selon la revendication 1, dans lequel la série de disques (14) est un embrayage multidisque disposé latéralement entre un moyeu d'entrée (24) dans le tambour d'embrayage (12) et un moyeu de sortie (50) et comprenant une pluralité de disques d'entraînement (54) et une pluralité de disques entraînés (56).

3. Ensemble formant embrayage (10) selon la revendication 2, dans lequel la série de disques (14) est placée axialement entre la première partie (16) et l'arbre d'entrée (15).

4. Ensemble formant embrayage (10) selon la revendication 2 ou 3, dans lequel les disques entraînés (56) sont connectés en entraînement à et mobiles axialement le long du moyeu de sortie (50), et les disques d'entraînement (54) sont connectés en entraînement à et mobiles axialement le long du moyeu d'entrée (24).

5. Ensemble formant embrayage (10) selon l'une quelconque des revendications précédentes, dans lequel la première partie (16) comprend une plaque d'extrémité d'embrayage (26) alignée axialement avec la série de disques (14).

6. Ensemble formant embrayage (10) selon la revendication 5, dans lequel la première partie (16) comprend un élément de poussée (22) en prise en butée avec la plaque d'extrémité d'embrayage (26).

7. Ensemble formant embrayage (10) selon la revendication 1, dans lequel la chambre hydraulique (42) est formée dans l'arbre d'entrée (15).

8. Ensemble formant embrayage (10) selon la revendication 1 ou 7, dans lequel le fluide hydraulique est introduit dans la chambre hydraulique (42) via un chemin de fluide (44, 46) disposé dans l'arbre d'entrée (15).

9. Ensemble formant embrayage (10) selon l'une quelconque des revendications précédentes, dans lequel le tambour d'embrayage (12) peut être actionné par un élément de sollicitation (38) et est adapté pour glisser axialement pour se dégager de la série de disques (14).

10. Ensemble formant embrayage (10) selon l'une quelconque des revendications 2 à 9, dans lequel le moyeu de sortie (50) est un moyeu d'engrenage.

11. Transmission comprend un ensemble formant embrayage (10) selon l'une quelconque des revendications précédentes.

12. Procédé d'assemblage d'un ensemble formant embrayage (10) selon l'une quelconque des revendications 1 à 10, comprenant les étapes suivantes :
fournir un tambour d'embrayage (12) comportant une première partie (16) et une deuxième partie (18) ;
accoupler en entraînement le tambour d'embrayage (12) avec un arbre d'entrée (15), le tambour d'embrayage (12) pouvant glisser axialement sur l'arbre d'entrée (15) ;
disposer de façon glissante une deuxième partie (18) du tambour d'embrayage (12) dans une chambre hydraulique (42) ; et
agencer le tambour d'embrayage (12) pour qu'il soit actionnable par un fluide hydraulique exerçant une pression sur la deuxième partie (18) pour qu'il glisse axialement jusqu'à se mettre en prise en pression avec la série de disques (14).

13. Procédé d'utilisation d'une transmission comprenant l'ensemble formant embrayage (10) selon l'une quelconque des revendications 1 à 10, comprenant l'étape suivante :
actionner un tambour d'embrayage (12) comportant une première partie (16) pour qu'il glisse axialement sur un arbre d'entrée (15) et une deuxième partie (18) disposée de façon glissante dans une chambre hydraulique (42) de telle manière que la première partie (16) se met en prise en pression avec une série de disques (14), le tambour d'embrayage (12) étant actionnable par un fluide hydraulique exerçant une pression sur la deuxième partie (18) pour qu'il glisse axialement jusqu'à se mettre en prise en pression avec la série de disques (14).
